# EUROPEAN PATENT APPLICATION

(11) **EP 3 306 048 A1**
(43) Date of publication of application: **11.04.2018**
(21) Application number: 16290194.6
(22) Date of filing: 05.10.2016
(51) Int. Cl.: F02B 29/04, F02M 35/10, F02M 35/112, F28D 21/00, F28D 7/16, F28F 9/22

(54) **AIR DUCT ARRANGEMENT AND COOLER**

(71) Applicant: MANN+HUMMEL GmbH, 71638 Ludwigsburg (DE)
(72) Inventor: Raimbault, Vincent, 53230 Cosmes (FR); Migaud, Jérôme, 35500 Vitré (FR); Sarrazin, Maxime, 53260 Entrammes (FR)
(74) Representative: Seyboth, Matthias

(57) **Abstract**

The invention relates to an air duct arrangement (100), in particular a charge air duct for a turbocharged engine, comprising an inlet air duct (60), a cooler (10) with an inlet (37) and an outlet (38), the cooler (10) comprising at least one air flow path portion (12, 14, 16, 18) extending between the inlet (37) and the outlet (38) along a longitudinal elongation (66) of the cooler (10) and having an outlet aperture (13, 15, 17, 19), and at least two runners (22, 24, 26, 28) of an air intake manifold (20) of an engine (40). The cooler (10) is arranged between the inlet air duct (60) and the runners (22, 24, 26, 28). Each runner (22, 24, 26, 28) has an inlet aperture (23, 25. 27, 29) and the outlet (38) of the cooler (10) is providing connection interfaces (73, 75, 77, 79) for the inlet apertures (23, 25. 27, 29) of the runners (22, 24, 26, 28).

## Description

### Technical Field

The invention relates to an air duct arrangement, in particular a charge air duct for a turbocharged engine, and a cooler, in particular for an air duct arrangement of a charge air duct for a turbocharged engine.

### Prior Art

For turbocharged engines, geometry, in particular diameter and length, of charge air ducts (also called charge air delivery ducts) is tuned to take benefits from pressure waves for improving the air filling into the engine cylinders, and thus performance.

In WO 2012/140196 A1, a method for producing an air duct arrangement is proposed, the air duct arrangement having a housing and at least one functional insert arranged in the housing. At least two housing parts are injection molded from plastic, wherein at least one functional insert is inserted into at least one of the housing parts. The housing parts, with the at least one functional insert inserted therein, are then welded to each other to form the housing.

### Disclosure of the Invention

It is an object of the invention to provide an air duct arrangement, in particular a charge air duct for a turbocharged engine which exhibits low pressure loss of the internal air flow.

Another object of the invention is to provide a cooler for such an air duct arrangement.

The objects are achieved according to one aspect of the invention by an air duct arrangement, in particular a charge air duct for a turbocharged engine, comprising an inlet air duct, a cooler with an inlet and an outlet, and at least two runners of an air intake manifold of an engine, wherein the cooler is arranged between the inlet air duct and the runners, each runner has an inlet aperture, and the outlet of the cooler is providing connection interfaces for the inlet apertures of the runners.

The other claims, the description and the drawings describe advantageous embodiments of the invention.

Charge air within the meaning of the invention shall be understood as compressed air, compressed by an exhaust turbocharger or any other kind of charger.

According to a first aspect of the invention, an air duct arrangement, in particular a charge air duct for a turbocharged engine, is proposed, comprising an inlet air duct, a cooler with an inlet and an outlet, the cooler comprising at least one air flow path portion extending between the inlet and the outlet along a longitudinal elongation of the cooler and having an outlet aperture, and at least two runners of an air intake manifold of an engine. The cooler is arranged between the inlet air duct and the runners. Each runnel has an inlet aperture. The outlet of the cooler is providing connection interfaces for the inlet apertures of the runners. Each flow path portion is provided with a separate connection interface in order to attach the respective runner in a gas-tight manner to the connection interface and, hence, to the air flow path portion. Thus a flow path portion may be represented by a separate segment of the cooler, where air is guided into a respective runner, possibly supported by additional air guiding walls. Alternatively an air flow path portion may just be represented by a geometrical portion of the cooler, where an air flow is streaming being guided into a respective runner.

Advantageously, acoustic resonance charging for improving the low end torque regime of a turbocharged engine is possible while the water charge air cooler may be positioned close to the inlet valves of the engine. The cooler may be a charge air cooler with a heat exchanger structure comprising cooling channels, where a cooling fluid like e.g. water is circulating and fins being arranged between the cooling channels, with air streaming alongside the fins. In contrary to the state of the art, where transversal arrangements of the heat exchanger structures quite often are used, according to the invention the use of a water charge air cooler in a sequential arrangement of the internal heat exchanger structures is proposed, so that the air may stream predominantly straight along in a parallel flow through the heat exchanger structure. Thus air may be streaming from the inlet air duct into the cooler and may maintain a parallel air flow direction while streaming through the cooler and getting cooled by the heat exchanger structure inside the cooler. In this case the cooler is arranged between the hot air side of the charge air duct and the runners. There is no plenum volume necessary behind the cooler. The runners are just connected with their input apertures to the outlet of the cooler, in a way just like each runner may constitute a part of the cooler.

Thus the air duct arrangement comprises the water charge air cooler between the inlet air duct with hot air and the runners of an air intake manifold, with no plenum volume between the cooler and the runners, and the runners sealed with their input apertures to the outlet of the cooler by e.g. gaskets arranged between the input apertures of the runner and the cooler. Alternatively the runners may be fixed to the cooler by glueing, a welding process, or by press fit, i.e. just by pressing rigid parts together. The tight connection between coolers and runners may also be achieved by a quick connection type interface.

The runners may partially be made with a shape decomposition inside water charge air cooler, in order to provide a smooth air flow regime between cooler and runners, meaning that the separate air flow path portions are shaped such that the air flow is guided in an appropriate way according to the shape of runners. For instance, a pressure loss at the transition from the air flow path portions to the respective runners may be decreased or even minimized. The cooler, which may be realized as a two stage water charge air cooler, may be arranged in such a way as to provide a mainly parallel air flow through the cooler, advantageously at least partly stabilized by air guiding walls inside the heat exchanger structures. The cooler itself may exhibit a relatively small cross section in order to achieve this. The runners are attached with their inlet apertures to connection interfaces of the cooler, each runner tightly sealed against each other. So there is no volume expansion taking place between cooler and runners, resulting in a favorable low pressure loss of the incoming air flow.

Different coolers may be used for four cylinder engines or three cylinder engines, but also configurations with one type of cooler for four and three cylinder engines are possible. Advantageously also each runner may be equipped with its own cooler.

According to an advantageous embodiment the cooler may be configured to provide an air flow being predominantly parallel to the longitudinal elongation between the inlet and the outlet of the cooler. Therefore fins of the heat exchanger structure inside the cooler may be arranged parallel to the air flow. Thus it may be achieved that the air flow passing the cooler may enter the runners without unwanted turbulences and without resulting pressure loss of the cooled air after the cooler and before the runners.

According to an advantageous embodiment at least two air flow path portions may be provided between the inlet and the outlet of the cooler and at least one of the air flow path portions is connected with its outlet aperture to the inlet aperture of one of the runners. The air flow inside the cooler may be guided in separate air flow path portions, which can also be separated by additional air guiding walls or be realized as separate cooling modules. Alternatively the cooler with its heat exchanger structure may be used as one cooling module, where the air flow is maintained in separate air flow path portions, possibly supported by additional streaming structures like air guiding walls. Advantageously such an air flow path portion, which comprises an outlet aperture at its downstream end, may be connected with its outlet aperture to an inlet aperture of one of the runners. Thus a continuous air flow without additional pressure loss of the air flow may be achieved.

According to an advantageous embodiment air guiding walls may be arranged in the cooler, such that an air flow from the inlet air duct through the cooler is split and guided along separate air flow path portions through the cooler to the connection interfaces for the runners. The air guiding walls between the air flow path portions enable the air flow to stream in a parallel way down the cooler and enter the inlet aperture of a runner in a smooth manner, as the air flow remains with the same cross section from the inlet of the cooler to the outlet of the cooler and into the runner, resulting in a minimum pressure loss of the streaming air flow.

According to an advantageous embodiment a length of the air guiding wall may be in a range of zero to a total length of the air flow path portions. The length of an air guiding wall may vary, depending on the geometry of the heat exchanger structure inside the cooler and the geometrical shape of the runner, such as its cross section, particularly near the connection interface of the cooler. Thus the air flow through the cooler and into the inlet aperture of the runner may be improved in a favorable manner. In an advantageous way the air guiding walls may extend through the whole length of the cooler.

According to an advantageous embodiment a shape of an air guiding wall may be configured to provide a smooth air flow into the respective runner. Particularly the shape of the runner may be extended into the cooler by adapting the shape of the air guiding walls to the shape of the runner, such that the air flow is well guided and results in a low pressure loss by entering the inlet aperture of the runner.

According to an advantageous embodiment an outlet aperture of the inlet air duct may cover the inlet of the cooler. Favorably the total cross section of the incoming air through the inlet air duct is guided into the cooler which may be achieved by covering the inlet of the cooler by the outlet aperture of the inlet air duct. Thus the whole air stream may be fed to the cooler resulting in favorable acoustic resonance charging for improving the low end torque regime of the turbocharged engine.

According to an advantageous embodiment the outlet aperture of the inlet air duct may cover inlet apertures of the air flow path portions. Particularly the incoming air flow may be fed to the air flow path portions through the inlet apertures by covering the inlet apertures in the whole cross section of the cooler by the outlet aperture of the inlet air duct. Thus, a maximum air charging effect may take place in order to get a favorable torque behavior of the turbocharged engine.

According to an advantageous embodiment the inlet air duct may provide at least two gas flow channels at least partially along its longitudinal elongation. Favorably, the flow channels are close to the outlet aperture of the inlet air duct, thus providing for a parallel flow of air when entering the cooler. In particular, the gas flow channels may correspond to the inlet apertures of the air flow path portions. Advantageously, a smooth transition of the air flow from the inlet air duct into the cooler is achieved. The air streaming in the gas flow channels of the inlet air duct may thus be preconditioned for parallel flow in the air flow path portions of the cooler.

According to an advantageous embodiment the inlet apertures of the runners may be connected to the connection interfaces at the outlet of the cooler in a rigid and/or gas-tight manner. The outlet of the cooler may exhibit connection interfaces for the runners, which are foreseen to connect the inlet apertures of the runners sealed against each other and against the ambient atmosphere in a gas-tight manner. The connection interfaces may also be equipped in order to connect the runners in a rigid way, so that a fixed connection between cooler and runners may be guaranteed under vibrational conditions during operation of the engine.

According to an advantageous embodiment the inlet apertures of the runners may be sealed with gaskets to the connection interfaces at the outlet of the cooler. For sealing of the runners to the connection interfaces of the cooler favorably gaskets may be used in an assembling process. Thus the runners of the air intake manifold may be disconnected and connected again during a repair or maintenance action. By this way a tight connection may be achieved even after re-assembling the air duct arrangement.

According to an advantageous embodiment the runners may be fixed to the connection interfaces at the outlet of the cooler by one of glueing, welding, press fit. Favorably a fixed connection between cooler and runners may be realized for assembly of the air duct arrangement. Particularly as plastics material may be used for the inlet air duct, e.g. a housing of the heat exchanger structures, and the runners of the air intake manifold, glueing may be one of favorable assembling techniques. Alternatively welding processes may be used for plastics components as well as for metallic components in a favorable way for durable assembly of the air duct arrangement. Also press fit may be used by pressing rigid parts together, which is possible for plastics and/or metallic components as well.

According to an advantageous embodiment the air path of the cooler may be composed of parallel air flow path portions. Parallel air streams through the cooler are advantageous for feeding parallel air streams in runners which are mounted perpendicular to the outlet of the cooler comprising connections interfaces which may be arranged in one plane due to one embodiment, yet in another embodiment may be arranged at different heights. Such a parallel air flow may favorably be achieved by using parallel air flow path portions which can additionally be supported by air guiding walls separating the air flow path portions. Thus a low pressure loss in air streaming from the inlet air duct through the cooler into the inlet apertures of the runners may be achieved.

According to an advantageous embodiment the runners may be at least partially made with a shape decomposition inside the cooler, meaning that the separate air flow path portions are shaped such that the air flow is guided in an appropriate way according to the shape of runners, thus decreasing a pressure loss between the air flow path portions and the respective runners. Providing the shape of the runners into the inside of the cooler may result in a favorable air flow inside the cooler. Thus the air flow inside the cooler may be guided in an advantageous manner into the inlet aperture of the runner, resulting in a minimum pressure loss of the air duct arrangement.

According to an advantageous embodiment the cooler may be a water charge air cooler. Two stage water air coolers are favorably used for charge air cooling of charge air ducts for turbocharged engines, because they are quite efficient and also ecologically beneficial coolers. Further such coolers are relatively cheap and very reliable.

According to another aspect of the invention a cooler, in particular for an air duct arrangement, is proposed, wherein the cooler has an inlet and an outlet and a longitudinal elongation between the inlet and the outlet, wherein an air flow path is provided between the inlet and the outlet. The cooler is arranged between the hot air side of the charge air duct, and before the runners of the air intake manifold. Favorably there is no plenum volume any more after the cooler. The runners may be just connected with their inlet apertures to the outlet of the cooler, in a way just like each runner may constitute a part of the cooler. Thus the air duct arrangement comprises the water charge air cooler between the inlet air duct with hot air and the runners of air intake manifold, with no plenum volume between the cooler and the runners, and the runners sealed with their inlets to the outlet of the cooler by e.g. a gasket between runners and the cooler.

According to an advantageous embodiment at least two air flow path portions may be arranged in parallel and providing an air flow predominantly in parallel with the longitudinal elongation. The air flow inside the cooler may be guided in separate air flow path portions, which can also be separated by additional air guiding walls or be realized as separate modules Parallel air streams through the cooler are advantageous for feeding parallel air streams in runners which are mounted perpendicular to the outlet of the cooler comprising connections interfaces which may be arranged in one plane due to one embodiment, yet in another embodiment may be arranged at different heights. Such a parallel air flow may favorably be achieved by using parallel air flow path portions which can additionally be supported by air guiding walls separating the air flow path portions. Thus a low pressure loss in air streaming from the inlet air duct through the cooler into the inlet apertures of the runners may be achieved.

According to an advantageous embodiment the at least two air flow path portions may be separated at least partially by air guiding walls. The air guiding walls between the air flow path portions enable the air flow to stream in a parallel way down the cooler and enter the inlet aperture of a runner in a smooth manner, as the air flow remains with the same cross section from the inlet of the cooler to the outlet of the cooler and into the runner, resulting in a minimum pressure loss of the streaming airflow.

According to an advantageous embodiment at least one of the air guiding walls may be shorter than the total length of the air flow path portions. The length of an air guiding wall may vary, depending on the geometry of the heat exchanger structure inside the cooler and the geometrical shape of the runner, particularly its cross section near the connection interface of the cooler. Thus the air flow through the cooler and into the inlet aperture of the runner may be improved in a favorable manner. Thus it may be advantageous, if at least one of the air guiding walls is shorter than total length of the air flow path portions of the cooler.

According to an advantageous embodiment at least one of the air guiding walls may be as long as the total length of the air flow path portions. Alternatively, in an advantageous way at least one of the air guiding walls may extend through the whole length of the cooler.

### Brief Description of the Drawings

The present invention together with the above-mentioned and other objects and advantages may best be understood from the following detailed description of the embodiments, but not restricted to the embodiments, wherein is shown in:
- Figure 1: in a schematic longitudinal cut view an air duct arrangement, comprising an inlet air duct, a cooler and four runners of an air intake manifold, attached to a four cylinder engine, according to an example embodiment of the invention;
- Figure 2: in a schematic longitudinal cut view an air duct arrangement, comprising an inlet air duct, a cooler and four runners of an air intake manifold, attached to a four cylinder engine, according to a further example embodiment of the invention;
- Figure 3: a top view of a cooler having a square-shaped cross section according to a further example embodiment of the invention;
- Figure 4: a top view along section line A-A in Figure 1 of the air duct arrangement with a cooler having an oblong cross section according to an example embodiment of the invention as shown in Figure 1;
- Figure 5: a top view of an air duct arrangement with a cooler having a circular cross section according to a further example embodiment of the invention;
- Figure 6: a top view of an air duct arrangement with a cooler having an oblong cross section for a three cylinder engine according to a further example embodiment of the invention;
- Figure 7: a top view of an air duct arrangement with a cooler having a circular cross section for a three cylinder engine according to a further example embodiment of the invention;
- Figure 8: in a schematic longitudinal cut view an air duct arrangement, comprising an inlet air duct, a cooler with air guiding walls of different length and four runners of an air intake manifold, connected to a four cylinder engine, according to a further example embodiment of the invention;
- Figure 9: in a schematic longitudinal cut view an air duct arrangement comprising an inlet air duct and two runners of an air intake manifold, where dedicated air flow path portions of a cooler are used, one for each runner, according to a further example embodiment of the invention; and
- Figure 10: in a schematic longitudinal cut view a cooler with four air flow path portions and air guiding walls of different length, according to the example embodiment of the invention of Figure 8.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

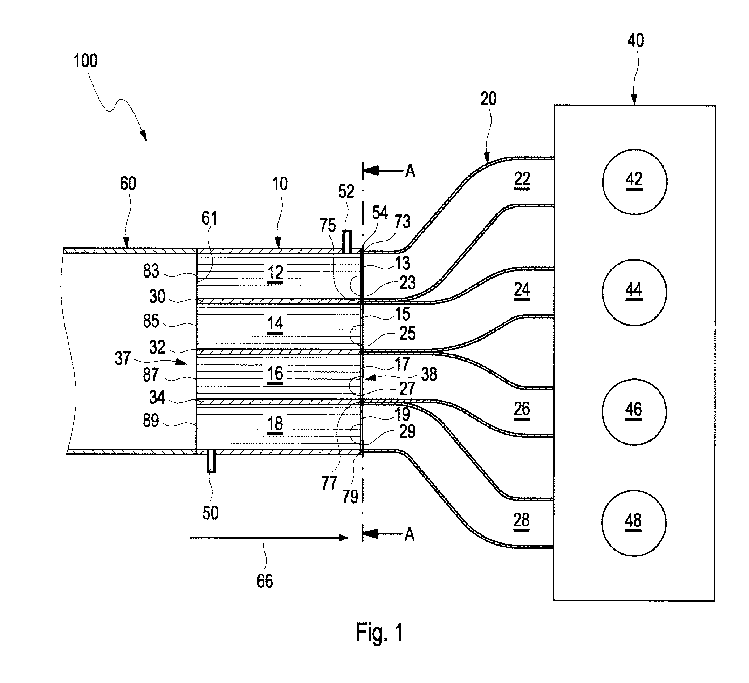

Figure 1 shows in a schematic longitudinal cut view an air duct arrangement 100 according to an example embodiment of the invention, comprising an inlet air duct 60, a cooler 10 and four runners 22, 24, 26, 28 of an air intake manifold 20, connected to an engine 40 with four cylinders 42, 44, 46, 48. In particular, the air duct arrangement 100 is foreseen as a charge air duct for a turbocharged engine. Hot air is entering the air duct arrangement 100 through the inlet air duct 60, followed by streaming through the cooler 10 along its elongation 66, where it gets cooled and then is distributed by runners 22, 24, 26, 28 into cylinders 42, 44, 46, 48 of the engine 40. For cooling of the streaming air water is entering the two stage water charge air cooler 10 via the water inlet 50, flows in a heat exchanger structure 58 inside the cooler 10, enabling the streaming air to transfer heat to the water, and leaves cooler 10 via the water outlet 52.

The cooler 10, which preferably may be a water charge air cooler, exhibits an inlet 37 and an outlet 38, and further comprises four parallel air flow path portions 12, 14, 16, 18 extending between the inlet 37 and the outlet 38 along a longitudinal elongation 66 of the cooler 10.

The air path of the cooler 10 is composed of parallel air flow path portions 12, 14, 16, 18. The air flow path portions 12, 14, 16, 18 exhibit inlet apertures 83, 85, 87, 89 and outlet apertures 13, 15, 17, 19. Cooler 10 is arranged between the inlet air duct 60 and the runners 22, 24, 26, 28. Each runner 22, 24, 26, 28 has an inlet aperture 23, 25. 27, 29. The air flow path portions 12, 14, 16, 18 are connected with its outlet aperture 13, 15, 17, 19 to the inlet aperture 23, 25. 27, 29 of one of the runners 22, 24, 26, 28.

The outlet 38 of the cooler 10 is providing connection interfaces 73, 75, 77, 79 for the inlet apertures 23, 25. 27, 29 of the runners 22, 24, 26, 28. The inlet apertures 23, 25, 27, 29 of the runners 22, 24, 26, 28 are connected with their inlet apertures to the connection interfaces 73, 75, 77, 79 at outlet 38 of the cooler 10 in a rigid and/or gas-tight manner, wherein the inlet apertures 23, 25, 27, 29 may be sealed with gaskets 54 to the connection interfaces 73, 75, 77, 79 at the outlet 38 of the cooler 10, as shown in Fig. 1. Alternatively, the runners 22, 24, 26, 28 may be fixed to the connection interfaces 73, 75, 77, 79 at the outlet 38 of the cooler 10 by one of glueing, welding, press fit.

An outlet aperture 61 of the inlet air duct 60 covers the inlet 37 of the cooler 10, in particular, the outlet aperture 61 covers the inlet apertures 83, 85, 87, 89 of the air flow path portions 12, 14, 16, 18.

The cooler 10 is configured to provide an air flow being predominantly parallel to the longitudinal elongation 66 between the inlet 37 and the outlet 38 of the cooler 10. The runners 22, 24, 26, 28 may at least partially be made with a shape decomposition inside the cooler 10 in order to guarantee a steady flow of the air inside the air flow path portions 12, 14, 16, 18 as well as a smooth transition of the air flow from the cooler 10 into the inlet apertures 23, 25, 27, 29.

Air flow path portions 12, 14, 16, 18 of the cooler 10 are arranged in parallel and providing an air flow predominantly in parallel with the longitudinal elongation 66 of the cooler 10. Air guiding walls 30, 32, 34, 36 are arranged in the cooler 10, such that an air flow from the inlet air duct 60 through the cooler 10 is split and guided along separate air flow path portions 12, 14, 16, 18 through the cooler 10 to the connection interfaces 73, 75, 77, 79 for the runners 22, 24, 26, 28. At least two air flow path portions 12, 14, 16, 18 are separated at least partially by air guiding walls 30, 32, 34, 36.

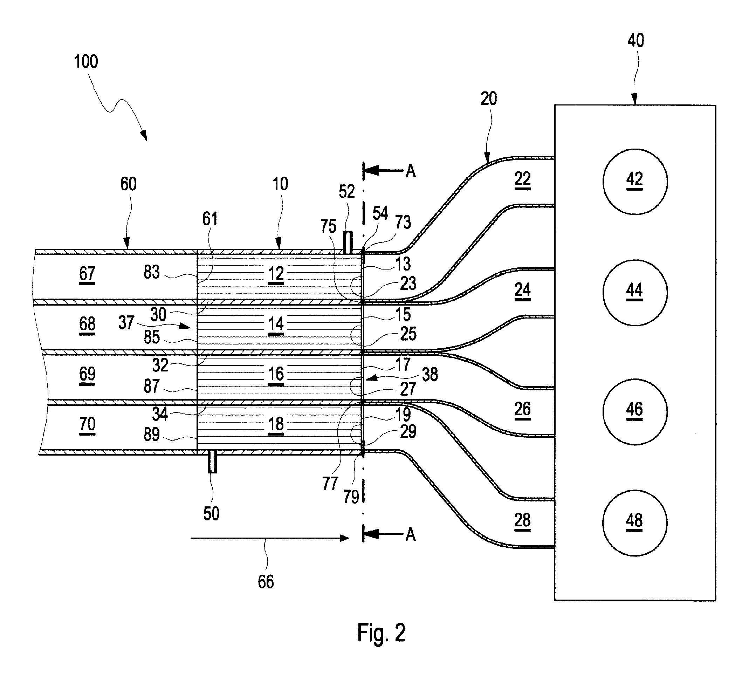

Figure 2 shows in a schematic longitudinal cut view an air duct arrangement 100 according to a further example embodiment of the invention, comprising an inlet air duct 60, a cooler 10 and four runners 22, 24, 26, 28 of an air intake manifold 20, connected to an engine 40 with four cylinders 42, 44, 46, 48. In particular, the air duct arrangement 100 is foreseen as a charge air duct for a turbocharged engine.

The arrangement corresponds predominantly to the arrangement shown in Figure 1. In the present example, the inlet air duct 60 provides separate gas flow channels 67, 68, 69, 70 close to its outlet aperture 61.

The gas flow channels 67, 68, 69, 70 are attached with its air guiding walls in a rigid and/or gas tight manner to the inlet 37 of the cooler 10. Thus the inlet duct 60 may be split into several gas flow channels 67, 68, 69, 70, which may be positioned close to each other wall by wall, as shown in Figure 2, but which could also be located separated one from each other, as long as they are attached to the air flow path portions 12, 14, 16, 18 of the cooler 10.

In the embodiment shown in Figure 2, the gas flow channels 67, 68, 69, 70 correspond to the inlet apertures 83, 85, 87, 89of the airflow path portions 12, 14, 16, 18. Thus air streaming in the gas flow channels 67, 68, 69, 70 is flowing directly into the corresponding air flow path portion 12, 14, 16, 18 of the cooler 10. The advantage is that the air flow may be already preconditioned in the gas flow channels 67, 68, 69, 70 for parallel flow in the cooler 10.

Optionally the inlet air duct 60 may provide an equal number or less or more gas flow channels 67, 68, 69, 70 than air flow path portions 12, 14, 16, 18 present in the cooler 10. Thus, air streaming in different air flow channels 67, 68, 69, 70 may be merged to flow into one of the air flow path portions 12, 14, 16, 18, if more gas flow channels 67, 68, 69, 70 than air flow path portions 12, 14, 16, 18 are provided. Alternatively air streaming in different air flow channels 67, 68, 69, 70 may be split to flow into more than one of the air flow path portions 12, 14, 16, 18, if less gas flow channels 67, 68, 69, 70 than air flow path portions 12, 14, 16, 18 are provided.

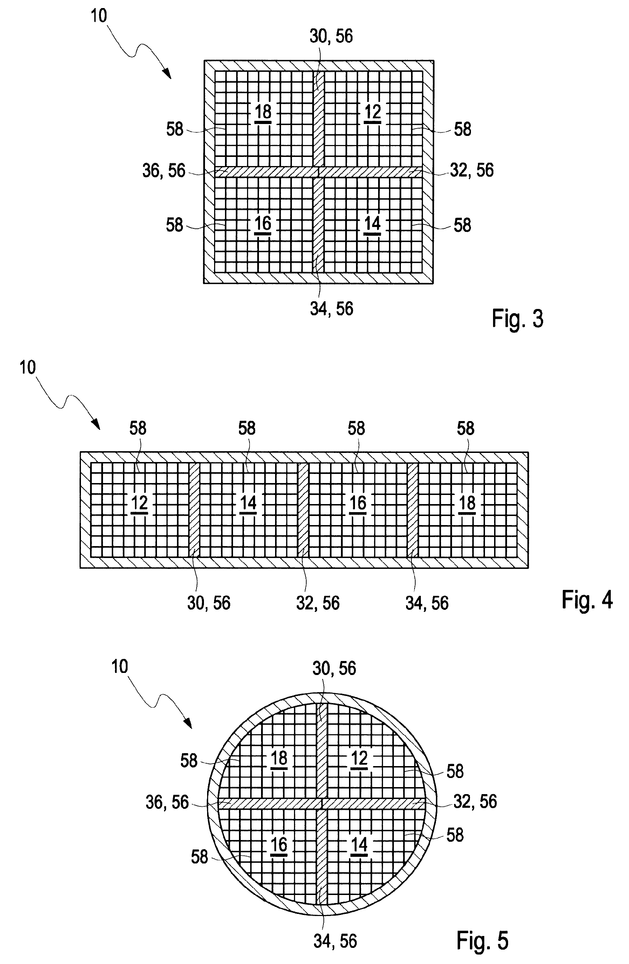

In Figures 3 to 7 schematic top views on different configurations of a cooler 10 with a view on the outlet 38 of the cooler 10 along a section line between the outlet 38 of the cooler 10 and the runners 22, 24, 26, 28 of an air duct arrangement 100 are depicted.

Figure 3 shows a top view of an air duct arrangement 100 with a cooler 10 having a square-shaped cross section at its outlet 38 according to a further example embodiment of the invention. The cooler 10 is separated into four air flow path portions 12, 14, 16, 18, which have a square-shaped cross section each and are placed according to a square shaped cross section of the cooler 10. Air guiding walls 30, 32, 34, 36 are arranged between the different air flow path portions 12, 14, 16, 18, in order to separate air flows at the outlet 38 of the cooler 10, entering the respective runners 22, 24, 26, 28 each. Inside the cooler 10 schematically a heat exchanger structure 58 is shown, which may be some fins with water tubes for cooling the hot air. On the front side of the air guiding walls 30, 32, 34, 36 a sealing area 56 is referenced for connecting the runners 22, 24, 26, 28 in a gas-tight manner to the outlet 38 of the cooler 10 and particularly connecting the inlet apertures 23, 25, 27, 29 of the runners 22, 24, 26, 28 to the connection interfaces 73, 75, 77, 79 of the cooler 10 in a gas-tight manner and sealed against each other runner 22, 24, 26, 28.

Figure 4 shows a top view along the section line A-A in Figure 1 of the air duct arrangement 100 with a cooler 10 having an oblong cross section at its outlet 38 according to an example embodiment of the invention as shown in Figure 1. In this cooler configuration the flat shaped cooler 10 is separated into four air flow path portions 12, 14, 16, 18, which have a square shape each are placed side by side in a row. Air guiding walls 30, 32, 34, 36 are arranged between the different air flow path portions 12, 14, 16, 18, in order to result in separate air flows at the outlet 38 of the cooler 10, entering the respective runners 22, 24, 26, 28 each. Thus the air flow through the cooler 10 may be separated into the different air flow paths at the outlet 38 of the cooler 10, entering the respective runners 22, 24, 26, 28 each. On the front side of the air guiding walls 30, 32, 34, 36 the sealing area 56 is depicted.

In Figure 5 a top view of an air duct arrangement 100 with a cooler 10 having a circular cross section at its outlet 38 according to a further example embodiment of the invention is depicted. The circular cooler 10 exhibits four air flow path portions 12, 14, 16, 18, which are arranged in a square configuration, but with an outer wall of a part of a tube, the tube representing the cooler 10 in a circular shape. Again air guiding walls 30, 32, 34, 36 are arranged between the different air flow path portions 12, 14, 16, 18, in order to result in separate air flows at the outlet 38 of the cooler 10, entering the respective runners 22, 24, 26, 28 each. On the front side of the air guiding walls 30, 32, 34, 36 the sealing area 56 is depicted.

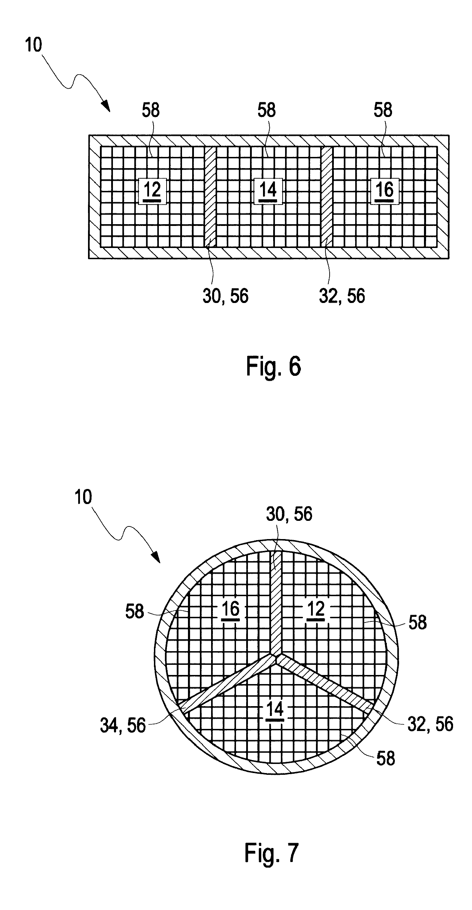

In Figure 6 a top view of an air duct arrangement 100 with a cooler 10 having an oblong cross section at its outlet 38 for a three cylinder engine according to a further example embodiment of the invention is depicted. The principal arrangement resembles the embodiment of Figure 4, but here the cooler 10 is only separated into three air flow path portions 12, 14, 16.

In Figure 7 a top view of an air duct arrangement 100 with a cooler 10 10 having a circular cross section at its outlet 38 for a three cylinder engine according to a further example embodiment of the invention is depicted. The principal arrangement resembles the embodiment of Figure 5, but here the cooler 10 is only separated into three air flow path portions 12, 14, 16.

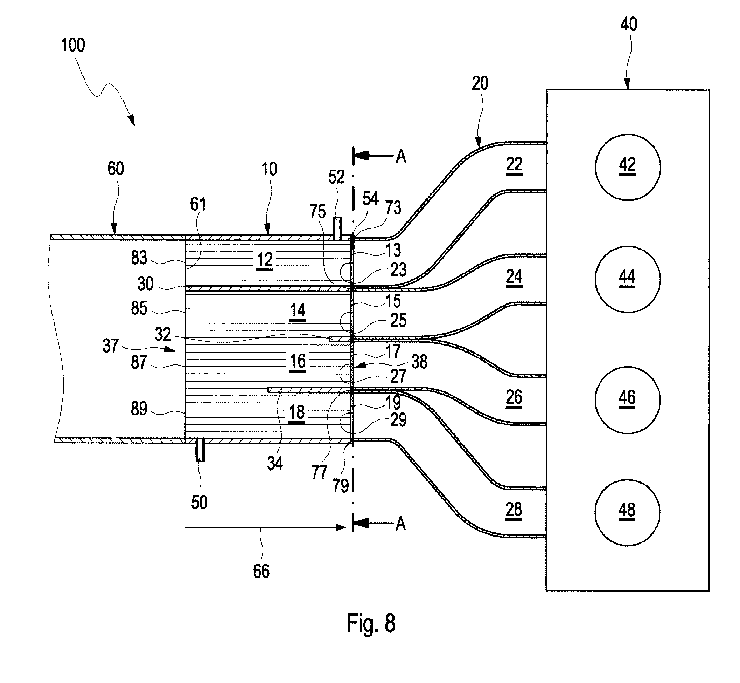

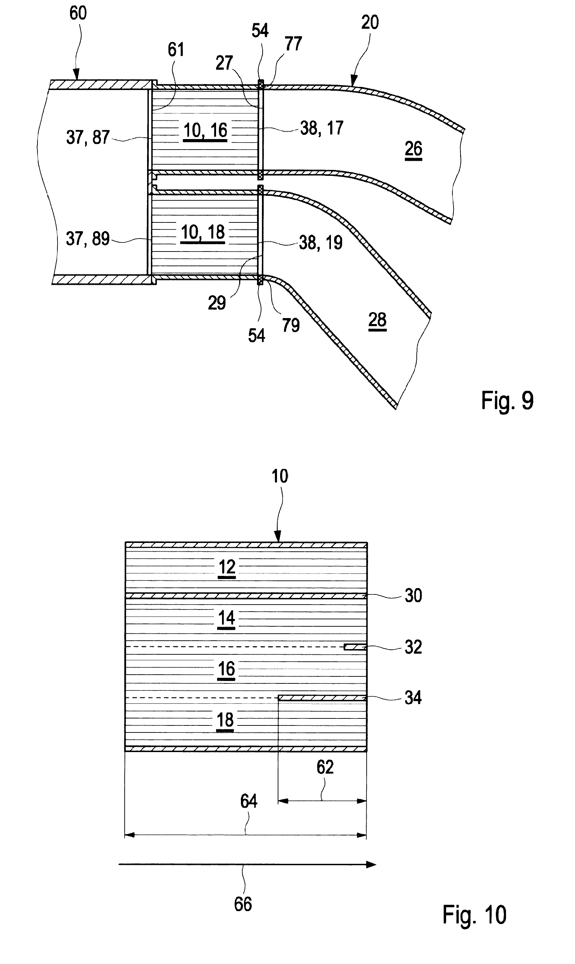

Figure 8 shows in a schematic longitudinal cut view an air duct arrangement 100, comprising an inlet air duct 60, a cooler 10 with air guiding walls 30, 32, 34 of different length and four runners 22, 24, 26, 28 of an air intake manifold 20, connected to a four cylinder engine 40, according to a further example embodiment of the invention. The configuration resembles the embodiment shown in Figure 1, the embodiment shown in Figure 8 exhibits air guiding wall 30, 32, 34, 36 with a length 62 which is in a range of zero to a total length 64 of the air flow path portions 12, 14, 16, 18. In more details this is to be seen in Figure 10. According to appropriate fluid dynamics of the respective air intake manifold 10 the length 62 of the air guiding walls 30, 32, 34, 36 may be adapted in length. So some air guiding wall 30 may cover the total length 64 of the air flow path portions 12, 14, 16, 18, some air guiding wall 34 may cover only half the length 64, or some air guiding wall 32 may cover only a small portion of the total length 64. Additionally a shape of an air guiding wall 30, 32, 34, 36 may be configured to provide a smooth air flow into the respective runner 22, 24, 26, 28.

Figure 9 depicts in a schematic longitudinal cut view an air duct arrangement 100 comprising an inlet air duct 60 and two runners 26, 28 of an air intake manifold 20, where dedicated air flow path portions 16, 18 of a cooler 10 are used, one for each runner 26, 28, according to a further example embodiment of the invention. In this example embodiment the air flow path portions 16, 18 are no longer arranged in a common housing of a cooler 10, but are arranged distributed at the outlet 61 of the inlet air duct 60. The advantage of this embodiment is that dedicated air flow path portions 16, 18 may be used for each runner 26, 28, optimized concerning e.g. air flow and cooling conditions. Thus the air flow path portions 16, 18 may be represented in a kind of separate coolers: each. The air flow path portions 16, 18 could also be positioned at an angle to each other, according to available space, thus deviating from the parallel position as depicted in Figure 9.

The runners 26, 28 are tightly connected to the connection interfaces 77, 79 of the air flow path portions 16, 18 as an outlet 38 of the cooler 10, which may be sealed with a gasket 54 at the connection interface 77, 79 of the respective air flow path portion 16, 18. Alternatively the runners 26, 28 could be connected in a rigid way to the connection interfaces 77, 79 by a quick lock connection or by glueing, welding or press fitting.

Water inlet 50 and outlet 52 of the cooler 10 are omitted in Figure 9 for simplification.

In Figure 10 in a schematic longitudinal cut view a cooler 10 is depicted with four air flow path portions 12, 14, 16, 18 and air guiding walls 30, 32, 34 of different length, according to the example embodiment of the invention, shown in Figure 8. Air guiding walls 32, 34 are shorter than the longitudinal elongation 66, where the air guiding wall 32 covers only a small part of the total length 64 and air guiding wall 34 covers about half of the total length 64. One of the air guiding walls 30 is as long as the total length 64.

## Claims

1. An air duct arrangement (100), in particular a charge air duct for a turbocharged engine, comprising an inlet air duct (60), a cooler (10) with an inlet (37) and an outlet (38), the cooler (10) comprising at least one air flow path portion (12, 14, 16, 18) along a longitudinal elongation (66) of the cooler (10) and having an outlet aperture (13, 15, 17, 19), and at least two runners (22, 24, 26, 28) of an air intake manifold (20) of an engine (40), wherein
- the cooler (10) is arranged between the inlet air duct (60) and the runners (22, 24, 26, 28),
- each runner (22, 24, 26, 28) has an inlet aperture (23, 25. 27, 29),
- the outlet (38) of the cooler (10) is providing connection interfaces (73, 75, 77, 79) for the inlet apertures (23, 25. 27, 29) of the runners (22, 24, 26, 28).

2. The air duct arrangement according to claim 1, wherein the cooler (10) is configured to provide an air flow being predominantly parallel to the longitudinal elongation (66) between the inlet (37) and the outlet (38) of the cooler (10).

3. The air duct arrangement according to claim 1 or 2, wherein at least two air flow path portions (12, 14, 16, 18) are provided between the inlet (37) and the outlet (38) of the cooler (10) and at least one of the air flow path portions (12, 14, 16, 18) is connected with its outlet aperture (13, 15, 17, 19) to the inlet aperture (23, 25. 27, 29) of one of the runners (22, 24, 26, 28).

4. The air duct arrangement according any one of the claims 2 or 3, wherein air guiding walls (30, 32, 34, 36) are arranged in the cooler (10), such that an air flow from the inlet air duct (60) through the cooler (10) is split and guided along separate air flow path portions (12, 14, 16, 18) through the cooler (10) to the connection interfaces (73, 75, 77, 79) for the runners (22, 24, 26, 28).

5. The air duct arrangement according to claim 4, wherein a length (62) of the air guiding wall (30, 32, 34, 36) is in a range of zero to a total length (64) of the air flow path portions (12, 14, 16, 18).

6. The air duct arrangement according to claim 4 or 5, wherein a shape of an air guiding wall (30, 32, 34, 36) is configured to provide a smooth air flow into the respective runner (22, 24, 26, 28).

7. The air duct arrangement according to any one of the preceding claims, wherein an outlet aperture (61) of the inlet air duct (60) covers the inlet (37) of the cooler (10).

8. The air duct arrangement according claim 7, wherein the outlet aperture (61) of the inlet air duct (60) covers inlet apertures (83, 85, 87, 89) of the air flow path portions (12, 14, 16, 18).

9. The air duct arrangement according to any one of the preceding claims, wherein the inlet air duct (60) provides at least two gas flow channels (67, 68, 69, 70) at least partially along its longitudinal elongation.

10. The air duct arrangement according to claim 9, wherein the gas flow channels (67, 68, 69, 18) correspond to the inlet apertures (83, 85, 87, 89) of the air flow path portions (12, 14, 16, 18).

11. The air duct arrangement according to any one of the preceding claims, wherein the inlet apertures (23, 25, 27, 29) of the runners (22, 24, 26, 28) are connected to the connection interfaces (73, 75, 77, 79) at the outlet (38) of the cooler (10) in a rigid and/or gas-tight manner.

12. The air duct arrangement according to claim 11, wherein the inlet apertures (23, 25, 27, 29) of the runners (22, 24, 26, 28) are sealed with gaskets (54) to the connection interfaces (73, 75, 77, 79) at the outlet (38) of the cooler (10).

13. The air duct arrangement according to claim 11, wherein the runners (22, 24, 26, 28) are fixed to the connection interfaces (73, 75, 77, 79) at the outlet (38) of the cooler (10) by one of glueing, welding, press fit.

14. The air duct arrangement according to any one of the preceding claims, wherein the air path of the cooler (10) is composed of parallel air flow path portions (12, 14, 16, 18).

15. The air duct arrangement according to any one of the preceding claims, wherein the runners (22, 24, 26, 28) are at least partially made with a shape decomposition inside the cooler (10).

16. The air duct arrangement according to any one of the preceding claims, wherein the cooler (10) is a water charge air cooler.

17. A cooler (10), in particular for an air duct arrangement (100) according to any one of the preceding claims, wherein the cooler (10) has an inlet (37) and an outlet (38) and a longitudinal elongation (66) between the inlet (37) and the outlet (38), wherein an air flow path is provided between the inlet (37) and the outlet (38).

18. The cooler according to claim 17, wherein at least two air flow path portions (12, 14, 16, 18) are arranged in parallel and providing an air flow predominantly in parallel with the longitudinal elongation (66).

19. The cooler according to claim 18, wherein the at least two air flow path portions (12, 14, 16, 18) are separated at least partially by air guiding walls (30, 32, 34, 36).

20. The cooler according to claim 19, wherein at least one of the air guiding walls (30, 32, 34, 36) is shorter than the total length (66) of the air flow path portions (12, 14, 16, 18).

21. The cooler according to any one of the claims 19 to 20, wherein at least one of the air guiding walls (30, 32, 34, 36) is as long as the total length (66) of the air flow path portions (12, 14, 16, 18).
